# EUROPEAN PATENT APPLICATION

(11) **EP 2 595 064 A2**
(43) Date of publication of application: **22.05.2013**
(21) Application number: 12170170.0
(22) Date of filing: 31.05.2012
(51) Int. Cl.: G06F 17/22

(54) **Display apparatus and control method thereof**

(30) Priority: 17.11.2011 KR 20110120009
(71) Applicant: Samsung Electronics Co., Ltd., Suwon-si, Gyeonggi-do, 443-742 (KR)
(72) Inventor: Song, In-jee, Gyeonggi-do (KR); Shin, Seung-min, Gyeonggi-do (KR); Lee, Hee-ran, Gyeonggi-do (KR); Choi, Sung-wook, Seoul (KR); Lee, Hye-jeong, Seoul (KR)
(74) Representative: Taor, Simon Edward William

(57) **Abstract**

A display apparatus includes a display unit; a storage unit storing a first manual comprising data structured in at least one category; and an image processor integrating data of the first manual and data of at least one second manual based on the at least one category to generate and store a third manual, and displaying the third manual on the display unit upon request.

## Description

Embodiments of the present invention relate to a display apparatus displaying an image based on an image signal and a control method thereof, and more particularly, to a display apparatus having a structure of efficiently managing manuals of various individual applications, and a control method thereof.

A display apparatus processes image signals input from external image sources and displays images based on the image signals on a display panel, such as a liquid crystal display (LCD). A display apparatus available to general users is configured as a TV, a monitor, a portable multimedia device, or the like. For example, a display apparatus configured as a TV conducts various processes, such as tuning and decoding, on broadcast signals received from the outside, thereby providing images of broadcast channels desired by users.

With advancements in technology and a growing amount of contents available, a display apparatus not only provides image contents but performs and provides various complicated functions by utilizing relatively advanced data processing speed and capacity. For example, a display apparatus downloads and installs applications corresponding to various functions through a network and executes installed applications. Applications have their individual manuals. When receiving a request for display of a manual of an application from a user while running the application, a display apparatus loads and displays the manual for the application.

Accordingly, one or more exemplary embodiments provide a display apparatus including: a display unit; a storage unit storing a first manual including data structured in at least one category; and a processor integrating data of the first manual and data of at least one second manual based on the at least one category to generate a third manual, storing the third manual, and displaying the third manual on the display unit upon request.

The image processor may generate the third manual by selecting data among the data of the second manual, wherein the data is selected based on at least one of status information about a structure and a function of the display apparatus and information about usage pattern of a user and by adding the selected data to the first manual.

The category may include a category name, and the processor may integrate data of the respective categories of the first manual and the second manual which have the same category name into the same category of the third manual.

Each of the manuals may conform to a Standard Generalized Markup Language (SGML) standard, and the processor may display an image of the third manual on the display unit according to the SGML standard.

The first manual may include information about an operating system for operation of the display apparatus, and the second manual may include information about an application installed on the operating system.

The display apparatus may further include a communication unit receiving the application through a network, the processor may extract the second manual from the application when the application is downloaded to the display apparatus.

The processor may delete data corresponding to the second manual from the third manual when the application is uninstalled on the operating system.

Another aspect may be achieved by providing a method of controlling a display apparatus, the method including: receiving at least one second manual by the display apparatus which stores a first manual including data structure in at least one category; and generating a third manual by integrating data of the first manual and data of the second manual based on the at least one category; storing the generated third manual, and displaying the third manual upon request.

The generating the third manual may include selecting data among the data of the second manual, wherein the data is selected based on at least one of status information about a structure and a function of the display apparatus and information about a usage pattern of a user; and may further include adding the selected data to the first manual.

The category may include category name, and the generating the third manual may include integrating data of the respective categories of the first manual and the second manual which have the same category name into the same category of the third manual. Each of the manuals may conform to an SGML standard, and the generating the third manual may include displaying an image of the third manual according to the SGML standard.

The first manual may include information about an operating system for operation of the display apparatus, and the second manual may include information about an application installed on the operating system.

The generating the third manual may include extracting the second manual from the application when the application is downloaded to the display apparatus.

The generating the third manual may include deleting data corresponding to the second manual from the third manual when the application is uninstalled on the operating system.

In the generating the third manual the data corresponding to the second manual may be deleted referring to history information which stores changes to contents of the first manual from the integration.

The generating the third manual may further include parsing the first manual and the second manual in which semantic examples of words appearing in a respective manual are determined.

The generating the third manual may further include changing at least one word with same meaning that is inconsistent between the first manual and the second manual to another word with the same meaning such that the same word is in the first manual and the second manual.

The other word may be defined in a terminology storage.

The first manual may include usage information and status information for the display apparatus.

Another aspect is to provide a non-transitory computer readable medium which stores a program which when executed causes a computer to implement a method including performing an event related to an application; and dynamically modifying a master manual to include at least a portion of an application manual stored on the computer based on the event. The event may be one of downloading the application onto the computer and uninstalling or deleting the application from the computer.

The master manual may include information about an operating system of the computer. The application manual may include information about the application. The dynamically modifying the master manual may include selecting a relevant portion of the application manual based on at least one of attribute information of the computer and user profile and integrating the selected information into the main manual to form an integrated manual.

The above and/or other aspects will become more apparent and more readily appreciated from the following description of exemplary embodiments, taken in conjunction with the accompanying drawings, in which:
FIG. 1 is a block diagram illustrating a configuration of a display apparatus according to an exemplary embodiment.
FIG. 2 is a conceptual view illustrating an exemplary image processor installing an application on an operating system in a display apparatus according to an exemplary embodiment.
FIG. 3 is a flowchart illustrating a method of the image processor generating an integrated manual in a display apparatus according to an exemplary embodiment.
FIG. 4 is a conceptual diagram illustrating an exemplary category structure of a manual in an exemplary method of generating an integrated manual according to an exemplary embodiment.
FIG. 5 is a view illustrating an example of an internal script of a main manual in a method of generating an integrated manual according to an exemplary embodiment.
FIG. 6 is a view illustrating an example of an internal script of an application manual in a method of generating an integrated manual according to an exemplary embodiment.
FIG. 7 is a view illustrating an example of an internal script of an integrated manual in a method of generating the integrated manual according to an exemplary embodiment.
FIG. 8 is a flowchart illustrating a control method of a display apparatus according to an exemplary embodiment.
FIG. 9 is a flowchart illustrating a control method when an application is uninstalled in a display apparatus according to an exemplary embodiment.

Below, exemplary embodiments will be described in detail with reference to the accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and analogous numeric references refer to similar elements throughout.

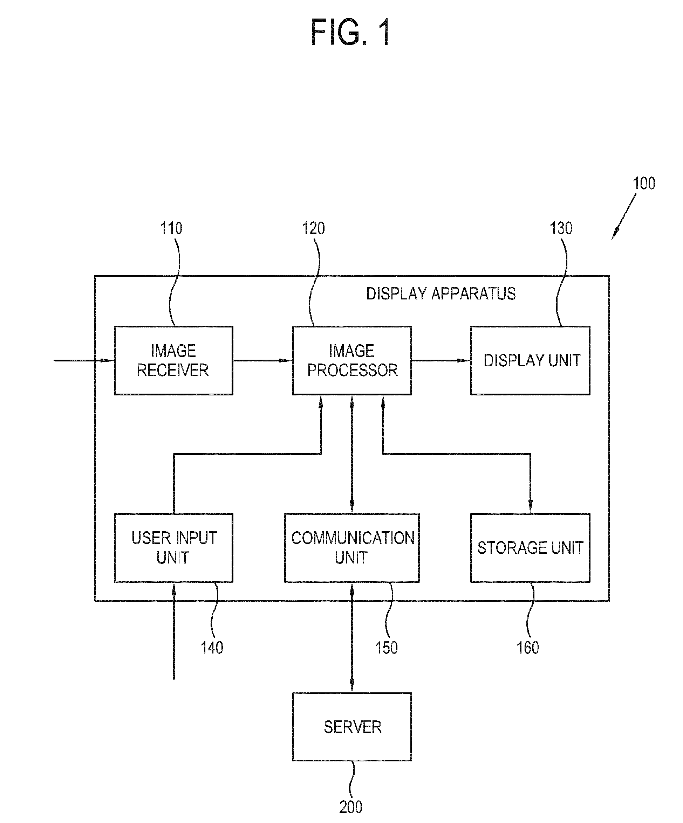

FIG. 1 is a block diagram illustrating a configuration of a display apparatus 100 according to an exemplary embodiment.

As shown in FIG. 1, the display apparatus 100 according to an exemplary embodiment includes an image receiver 110 receiving image signals from external image supply sources (not shown), an image processor 120 processing image signals received by the image receiver 110 to be presented as images, a display unit 130 displaying images based on image signals processed by the image processor 120, a user input unit 140 transmitting preset commands to the image processor 120 based on manipulation by a user, a communication unit 150 communicating with a server 200 to transmit/receive signals/data/information to/from the server 200, and a storage unit 160 accessed by the image processor 120 and storing signals/data/information.

An exemplary embodiment may be applied to the display apparatus 100 configured as various types of devices such as a TV, a monitor or a portable multimedia player and so on.

The image receiver 110 receives image signals wirelessly or through a wire and transmits the signals to the image processor 120. The image receiver 110 may be configured as various types of receivers corresponding to standards of received image signals and types of the display apparatus 100. When an image signal is a broadcast signal, the image receiver 110 includes a tuner to tune the broadcast signal by each channel.

The image receiver 110 may receive radio frequency (RF) signals transmitted from broadcasting stations (not shown) or various image signals according to composite/component video, super video, SCART, high definition multimedia interface (HDMI), DisplayPort, unified display interface (UDI) or wireless HD standards. The image receiver may also include a standard hardware such as a tuner, amplifiers and so on.

The image processor 120 performs various preset image processing processes on received image signals/image data.

The image processor 120 outputs processed image signals to the display unit 130 such as a screen, so that images based on the corresponding image signals are displayed on the display unit 130. Further, the image processor 120 may control image processing processes based on various control signals/commands/information received through the user input unit 140.

The image processor 120 may perform, without being limited to, for example, decoding corresponding to various image formats, de-interlacing, frame refresh rate conversion, scaling, noise reduction to improve image quality, detail enhancement, or the like. The image processor 120 may be provided as a separate component which independently conducts each process or as an integrated multi-functional component, such as a system on chip (SOC).

Further, the image processor 120 is configured as a printed circuit board (not shown) on which a CPU (not shown) and a chipset (not shown) are mounted and runs applications with various functions while running operating system software. The operating system and the applications are stored in the storage unit 160, discussed below.

The image processor 120 may provide to the display unit 130 an image of a manual associated with the operating system upon request received via the user input unit 140. Meanwhile, when a corresponding application is received from an outside of the display apparatus 100 or is installed on the operating system used by the display apparatus 100, the image processor 120 integrates a manual of an application with the manual of the operating system to generate a new integrated manual. Further, when receiving a request for displaying a manual, the image processor 120 displays an image of the generated integrated manual on the display unit 130, which will be described in detail below.

The display unit 130 displays images based on image signals output from the image processor 120. The display unit 130 may be configured in various display modes using, for example, liquid crystals, plasma, light emitting diodes, organic light emitting diodes, a surface conduction electron emitter, a carbon nano-tube, nano-crystals, or the like, without being limited thereto.

The communication unit 150 is connected to the server 200 through a wire/wirelessly to communicate therewith through a network based on a predetermined protocol. The communication unit 150 performs a two-way communication so that the image processor 120 transmits/receives data to/from the server 200. The communication unit 150 transmits data received from the server 200 to the image processor 120, or transmits data received from the image processor 120 to the server 200.

The user input unit 140 transmits various preset control signals/commands to the image processor 120 obtained from user's manipulation and input. The image processor 120 performs processes corresponding to characteristics of signals according to the signals transmitted from the user input unit 140. The user input unit 140 may be configured as various types of input units, such as a menu key and an input panel installed on an outer portion of the display apparatus 100 or a remote controller (not shown) provided separately from the display apparatus 100.

The storage unit 160 includes a nonvolatile memory which can read/write, such as a flash memory or hard disk drive. The storage unit 160 is accessible by the image processor 120, and retrieval, reading, writing and revision of data are carried out by the image processor 120. Further, the storage unit 160 stores operating system software, running and executed by the image processor 120, and at least one application installed and executable on the operating system.

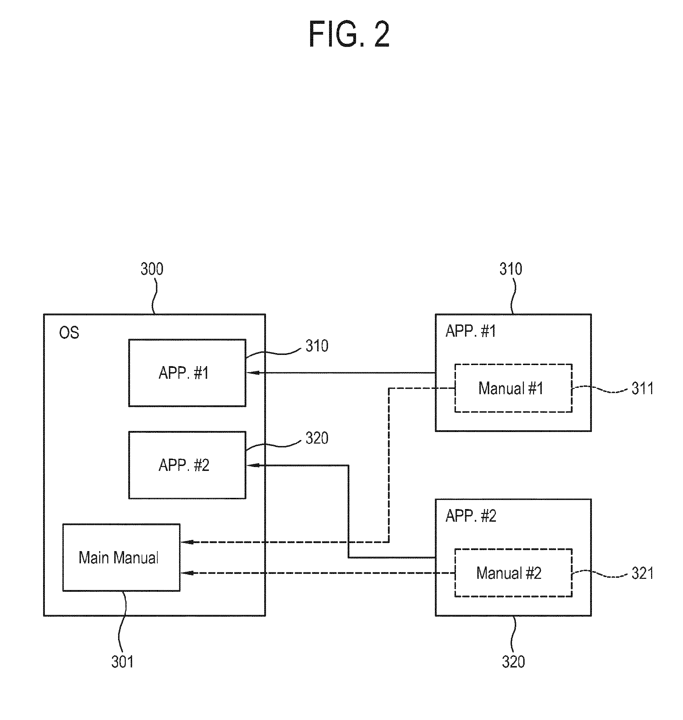

With this exemplary configuration, the image processor 120 may install applications 310 and 320 on an operating system 300 with reference to an exemplary diagram depicted in FIG. 2. FIG. 2 is a conceptual view illustrating an example of the image processor 120 installing the applications 310 and 320 on the operating system 300 according to an exemplary embodiment.

As shown in FIG. 2, while the operating system 300 of the display apparatus 100 is running, the image processor 120 may receive the applications 310 and 320 from the server 200 through a particular event. This particular event may occur by commands of downloading and installing the applications 310 and 320 through the user input unit 140 or at a predetermined time based on some scheduled event such as an automated update.

When the applications 310 and 320 are downloaded from the server 200, the image processor 120 installs the applications 310 and 320 on the operating system 300 to be executable. The installed applications 310 and 320 are executed on the operating system 300.

Here, the respective applications 310 and 320 may include manuals 311 and 321 including profiles, functions or uses of the applications 310 and 320. The manuals 311 and 321 of the respective applications 310 and 320 are installed as well on the operating system 300 when the applications 310 and 320 are installed.

Since the operating system 300 is a sort of an application, the operating system 300 includes a main manual 301 including information about the operating system 300. Hereinafter, the manual 301 of the operating system is designated as a main manual 301.

Here, the image processor 120 according to an exemplary embodiment integrates the manuals 311 and 321 of the applications 310 and 320, respectively, with the main manual 301 to generate a new integrated manual when the applications 310 and 320 are completely downloaded or installed.

Then, when receiving a request for a display of the main manual 301 or the manuals 311 and 321 of the particular applications 310 and 320 via the user input unit 140, the image processor 120 displays an image of the integrated manual on the display unit 130.

Accordingly, to refer to a manual 311 or 321 of a particular application 310 or 320, a user may not need to execute the applications 310 and 320 one by one in order to display the manuals 311 and 312 and may conveniently retrieve or refer to not only a manual of the corresponding application 310 or 320 but a manual of other applications 310 and 320 from the integrated manual.

An exemplary embodiment illustrates that the manuals 311 and 312 of the applications 310 and 320 are integrated into the main manual 301 of the operating system 300 to generate an integrated manual, without being limited thereto. According to another exemplary embodiment, for example, the main manual 301 of the operating system 300 is omitted and a separate manual having only the manuals 311 and 321 of the applications 310 and 320 are integrated to generate an integrated manual.

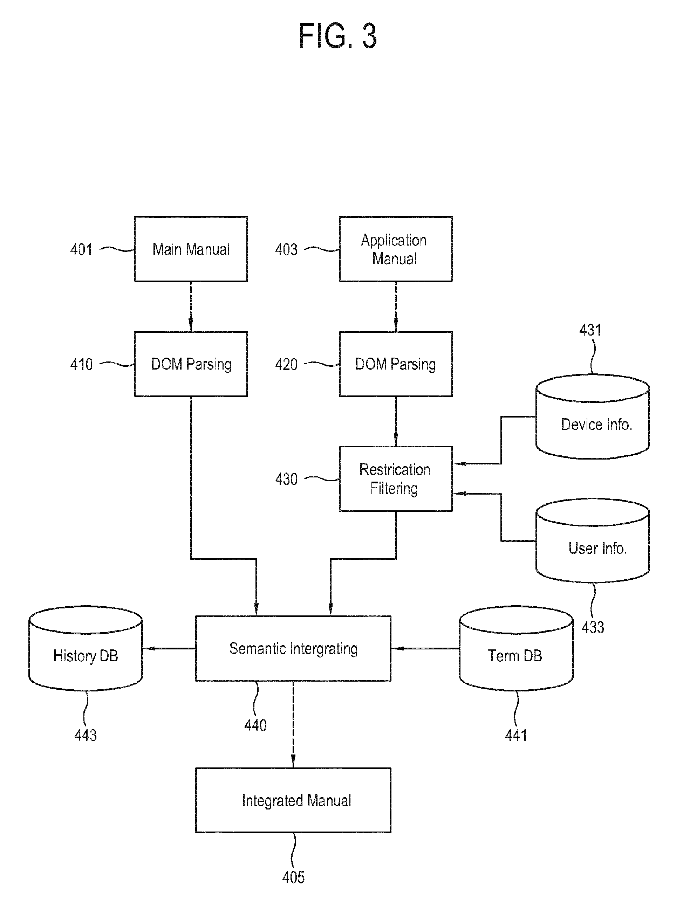

Hereinafter, a method of the image processor 120 generating an integrated manual 405 is described in detail with reference to FIG. 3. FIG. 3 is a flowchart illustrating a method of the image processor 120 generating the integrated manual 405 according to an exemplary embodiment.

As shown in FIG. 3, the image processor 120 integrates data of a main manual 401 with data of an application manual 403 to generate the integrated manual 405 by a method as follows.

The main manual 401 and the application manual 403 have structured information according to a preset document object model (DOM). The image processor 120 parses a DOM structure of each of the main manual 401 and the application manual 403 (410, 420).

A document in a DOM structure denotes a document in a structure in which data in the main manual 401 or the application manual 403 is classified by preset categories or nodes. An exemplary DOM structure will be described in greater detail herein below.

The image processor 120 parses the DOM structure of the application manual 403 and filters data in the application manual 403 based on at least one of current status information 431 about the display apparatus 100 and user's usage pattern information 433 (in operation 430). That is, the image processor 120 selects data corresponding to at least one of the current status information 431 about the display apparatus 100 and the user's usage pattern information 433 from the data in the application manual 403.

Here, the current status information 431 about the display apparatus 100 includes various types of information indicating statuses associated with a structure and functions of the display apparatus 100. For example, the status information 431 includes items set up and changed by a user or items not set up by a user among the structure/functions of the display apparatus 100, for example, selection of a source (not shown) of an image signal processed by the image processor 120, adjustment of quality of an image displayed on the display unit 130, a communication status when the display apparatus 100 is connected to a communication network, and a connection status of an external device (not shown) to the display apparatus 100.

Further, the structure and functions of the display apparatus 100 include specifications of particular hardware and software configurations, which constitute the display apparatus 100, and correlations between these configurations.

In addition, the user's usage pattern information 433 includes a usage record of the display apparatus 100, for example, a profile of a user including personal data, user's preference for image contents, a record of image contents viewed by the user, or the like. The usage pattern information 433 is input personally by a user through the user input unit 140 or is generated by the image processor 120 collecting a usage record for a preset period of time, and thus may be modified variously in designing the apparatus.

Meanwhile, the data filtering 430 may be conducted in view of a case that the data of the application manual 403 includes multilingual versions of the same contents. The image processor 120 may retrieve a profile of a user from the user's usage pattern information 433 and select data in a language corresponding to the profile of the user of the display apparatus 100 only among the application manual 403.

As another example, when the data of the application manual 403 corresponds to a plurality of preset status of the display apparatus 100 and a current status of the display apparatus 100 corresponds to any one of the particular statuses, the image processor 120 may select only data that corresponds to the current status of the display apparatus 100 from the application manual 403.

The image processor 120 integrates the respective data of the main manual 401 and the application manual 403 based on the same node or category (in operation 440). That is, the image processor 120 integrates the filtered data of the application manual 403 into a corresponding node of the main manual 401, that is, the same type of node. Accordingly, an integrated manual 405 is generated, in which information about the main manual 401 and information about the application manual 403 are integrated. Here, when integrating the main manual 401 and the application manual 403, the image processor 120 may refer to term information or a term database 441 in order to determine semantic examples of the words appearing in the manuals. If terms (words) used in the main manual 401 and the application manual 403 are not consistent with each other, the image processor 120 may change the inconsistent terms to a term defined in the terminology database 441.

Here, a node of the main manual 401 and a node of the application manual 403 may have the same name, but the respective nodes have different node names only but fall within the same category. In this case, the image processor 120 determines whether the nodes of the manuals correspond to each other with reference to the term database 441, and may integrate data of the respective nodes when they correspond to each other.

Further, the image processor 120 stores changed contents due to integration of the main manual 401 and the application manual 403 as history information in a history database 443. If the application manual 403 is deleted from the integrated manual 405 according to an event, for example, uninstallation of an application, the image processor 120 may conveniently delete the application manual 403 according to a record in the history database 443.

The databases described above may be constructed on the basis of an ontology-based knowledge modeling system. An ontology is a formal explicit specification of a shared conceptualization and includes records in a database and relationships between the records. An ontology-based database includes hierarchically organized records and words associated with a particular domain and further includes inference rules to expand the database. An ontology is a core concept of a semantic web application and enables information retrieval by semantic inference of a keyword in search for a database, instead of a formal retrieval.

With this method, the image processor 120 generates the integrated manual 405, and displays an image of the integrated manual 405 on the display unit 130 upon receiving a request for a display of an image of a manual via the user input unit 140.

As various applications are installed in the display apparatus 100, a use may not be aware of which application performs which function. Conventionally, in this case, an application may need to be executed first in order to display a manual of the application.

According to an exemplary embodiment, however, manuals 403 of various applications are integrated into the main manual 401 to generate the integrated manual 405, so that a user may conveniently retrieve and identify the manuals of the whole applications through the integrated manual 405 without running any of the applications.

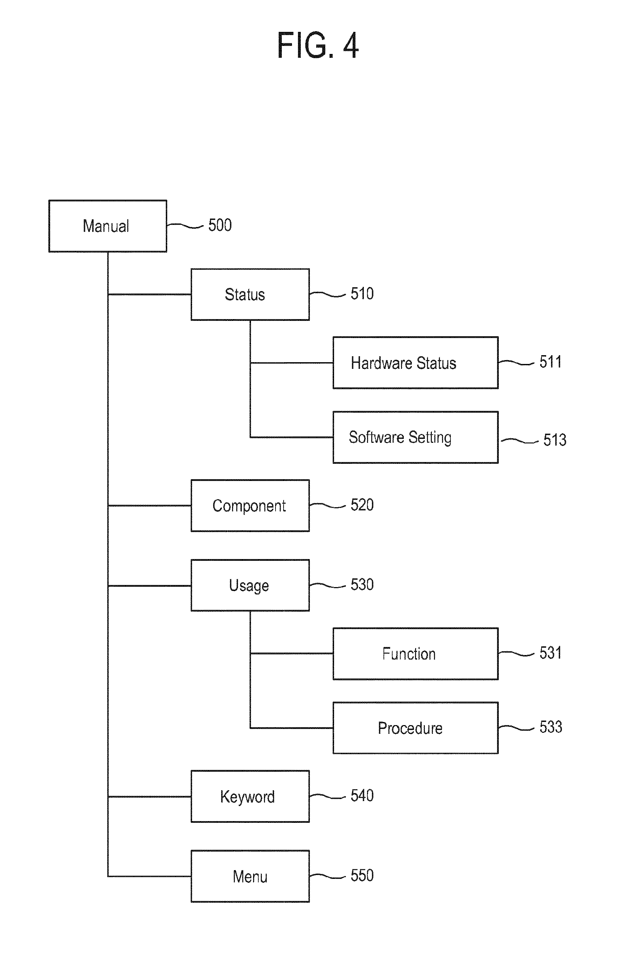

Hereinafter, an exemplary embodiment of a category or node structure of a manual is described with reference to FIG. 4. It should be noted that an exemplary embodiment shows an illustrative example of data of the manual constructed into a node only, without being limited to a particular node. FIG. 4 illustrates an example of a node structure of a manual.

As shown in FIG. 4, data of a manual is classified according to a hierarchical structure of respective nodes 500, 510, 511, 513, 520, 530, 531, 533, 540 and 550. That is, a highest node, Manual 500, corresponding to one application, includes sub-nodes, for example, Status 510 including status information about hardware or software, Component 520 including information about hardware components included in the apparatus, Usage 530 including use of the apparatus or the application, Keyword 540 defining primary terms and vocabulary used in the manual, and Menu 550 including information about an interface of the application.

Each sub-node may have further one or more individual sub-nodes. For example, Status 510 includes Hardware status 511 about hardware and Software status 513 about software. Usage 530 includes Function 531 defining each executable function and Procedure 533 defining procedures of performing the function.

As described above, the respective nodes 500, 510, 511, 513, 520, 530, 531, 533, 540 and 550 in the node structure of the manual have individual node names or category names to be distinguished from one another. The image processor 120 may determine data classification by the nodes through DOM parsing and may display an image of the manual based on each node according to an SGML standard, such as HTML or XML.

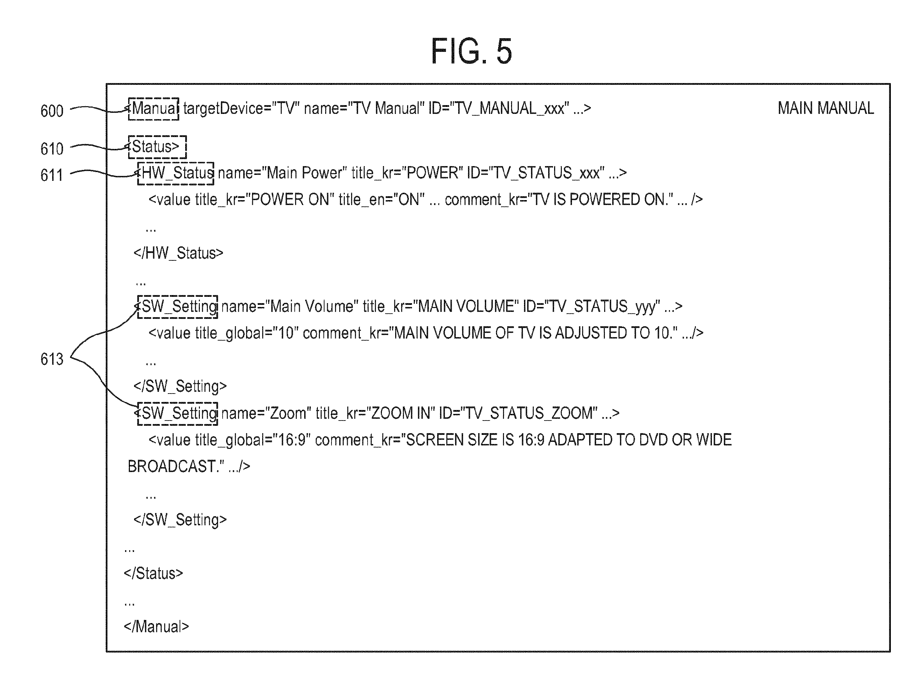

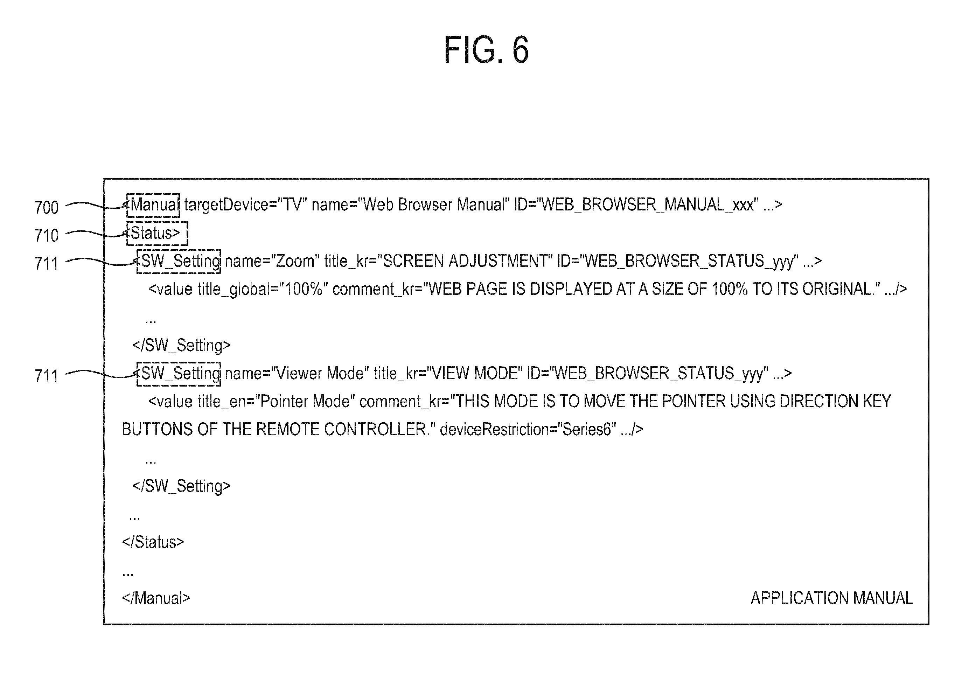

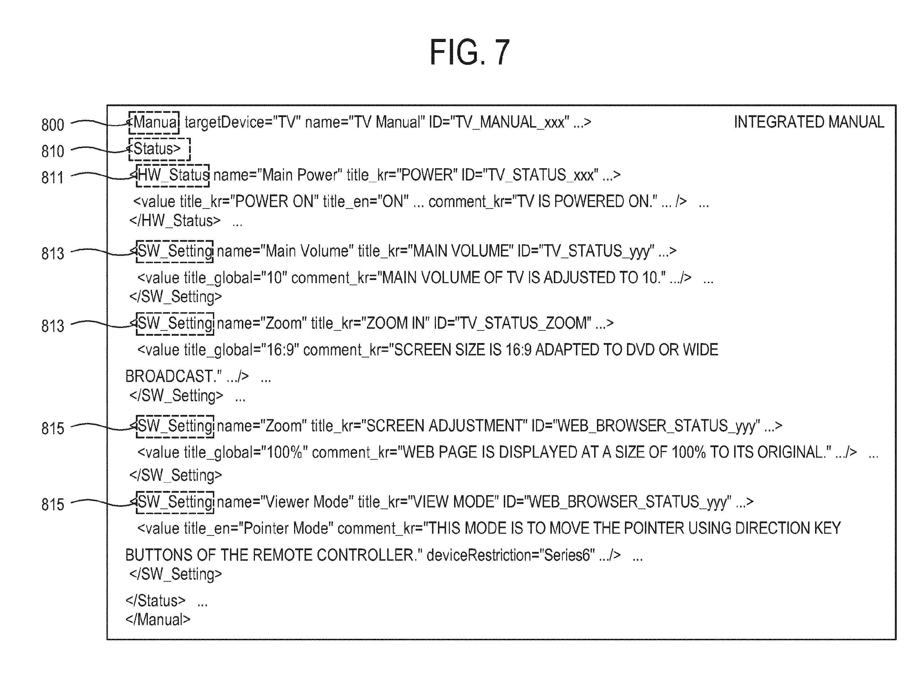

Hereinafter, an exemplary method of the image processor 120 integrating a main manual and an application manual to generate an integrated manual is described in detail with reference to FIGS. 5 to 7, illustrating an internal script of a manual as an example. FIG. 5 illustrates an example of an internal script of a main manual, FIG. 6 illustrates an example of an internal script of an application manual, and FIG. 7 illustrates an example of an internal script of an integrated manual.

As shown in FIG. 5, in the main manual, node name and data are specified in "<>" according to the SGML standard.

The main manual has an internal configuration as follows. Under highest node "Manual" 600 is node "Status" 610, and under node "Status" 610 is nodes "HW_Status" 611 and "SW_Setting" 613.

Meanwhile, as shown in FIG. 6, in the application manual, under highest node "Manual" 700 is node "Status" 710, and under node "Status" 710 is node "SW_Setting" 711.

The image processor 120 judges, based on node names, that "Manual" 600 (FIG. 5) of the main manual and "Manual" 700 (FIG. 6) of the application manual are the same node and "Status" 610 (FIG. 5) and "Status" 710 (FIG. 6) are the same node.

Accordingly, the image processor 120 adds data corresponding to node "SW_Setting" 711 (FIG. 6) of the application manual to "Status" 610 of the main manual as a sub-node, thereby generating an exemplary integrated manual as shown in FIG. 7. Here, as described above, the image processor 120 may filter data of the application manual to be added according to a particular condition.

As shown in FIG. 7, in the integrated manual, under highest node "Manual" 800 is node "Status" 810. "HW_Status" 811 and "SW_Setting" 813 under node "Status" 810 correspond to "HW_Status" 611 (FIG. 5) and "SW_Setting" 613 (FIG. 5) of the main manual, respectively, and "SW_Setting" 815 corresponds to "SW_Setting" 711 of the application manual.

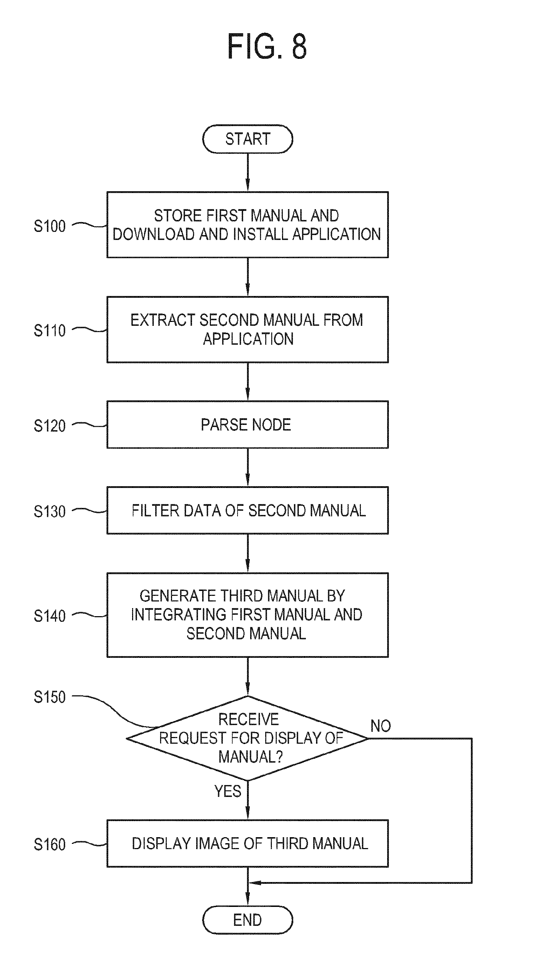

By this method, the image processor 120 may parse a manual constructed according to the SGML standard and construct each manual into an integrated manual. Hereinafter, a control method of the display apparatus 100 according to an exemplary embodiment is described with reference to FIG. 8. FIG. 8 is a flowchart illustrating a process of integrating manuals according to an exemplary embodiment.

As shown in FIG. 8, the display apparatus 100 is storing a manual of an operating system, for example, a first manual. In this state, an application is downloaded and installed in the display apparatus (operation S100).

The image processor 120 extracts a manual of the application, for example, a second manual, from the application (operation S110). The image processor 120 parses each node of the first manual and the second manual through DOM parsing (operation S120).

The image processor 120 performs filtering to select data of the second manual based on a preset condition, for example, information about a current status of the display apparatus 100 or user's usage pattern (operation S130).

The image processor 120 integrates the first manual with the second manual node by node to generate and store a new third manual (operation S140). Here, the image processor 120 stores a process of generating the third manual in a separate history database.

If receiving a request for a display of a manual (operation S150), the image processor 120 controls the display to display an image of the third manual (operation S160).

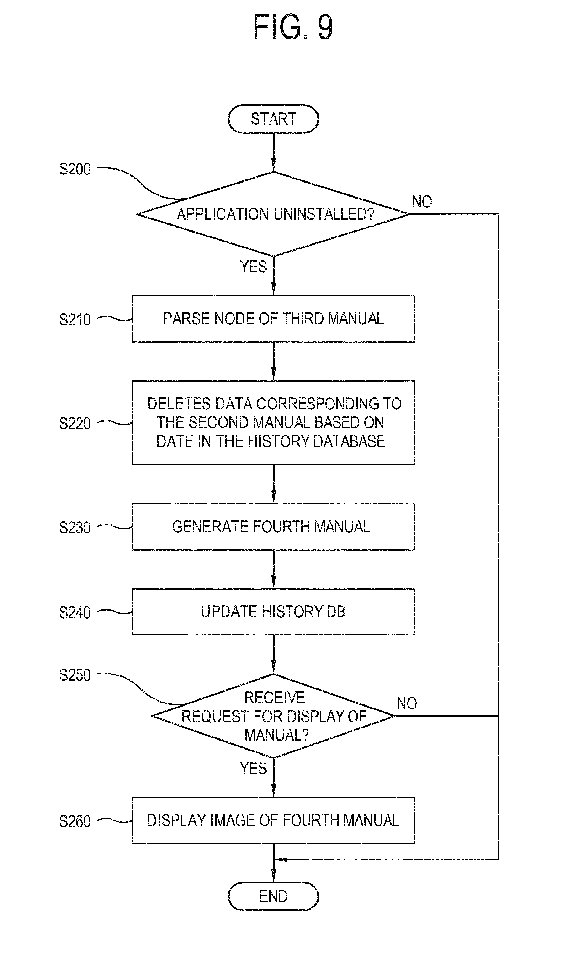

Meanwhile, it is possible to delete data of the second manual from the third manual generated above according to a particular event, which is described with reference to FIG. 9 according to an exemplary embodiment. FIG. 9 is a flowchart illustrating a deleting process.

As shown in FIG. 9, when an event happens that a particular application is uninstalled on the operating system (operation S200), the integrated third manual does not need to have the second manual corresponding to the uninstalled application.

Thus, the image processor 120 parses a node of the third manual (operation S210). The image processor 120 deletes data corresponding to the second manual from the third manual based on the history database in which the process of generating the third manual is recorded (operation S220). Then, the image processor 120 generates and store a fourth manual according to the deleting process (operation S230) and updates the history database based on the deleting process (operation S240).

If receiving a request for a display of a manual (operation S250), the image processor displays an image of the fourth manual (operation S260).

The previous description of various exemplary embodiments is provided to enable a person skilled in the art to dynamically adjust integration manual based on the installed applications. Moreover, various modifications to these exemplary embodiments will be readily apparent to those skilled in the art, and the generic principles and specific examples defined herein may be applied to other exemplary embodiments. For example, some or all of the features of the different embodiments discussed above may be combined into a single embodiment. Conversely, some of the features of a single embodiment discussed above may be deleted from the embodiment. Therefore, the present invention is not intended to be limited to the exemplary embodiments described herein but is to be accorded the widest scope as defined by the features of the claims and equivalents thereof. In other words, although a few exemplary embodiments have been shown and described, it will be appreciated by those skilled in the art that changes may be made in these exemplary embodiments without departing from the principles of the invention, the scope of which is defined in the appended claims.

## Claims

1. A display apparatus comprising:
a storage unit which stores a first manual comprising structured data in at least one category; and
a processor configured to integrate data of the first manual and data of at least one second manual based on the at least one category into a third manual and control output of the third manual to a display unit upon request.

2. The display apparatus of claim 1, wherein the processor is configured to generates the third manual by selecting data from the data of the second manual, wherein the selected data is selected based on at least one of status information about a structure and a function of the display apparatus and information about a usage pattern of the user and by adding the selected data to the first manual.

3. The display apparatus of claim 1, wherein the category comprises a category name, and wherein the processor integrates data of the respective categories of the first manual and the second manual which have the same category name into the same category of the third manual.

4. The display apparatus of claim 1, wherein each of the manuals conforms to a Standard Generalized Markup Language (SGML) standard, and the processor displays an image of the third manual on the display unit according to the SGML standard.

5. The display apparatus of claim 1, wherein the first manual comprises information about an operating system for operation of the display apparatus, and the second manual comprises information about an application installed on the operating system.

6. The display apparatus of claim 5, further comprising a communication unit configured toreceive the application through a network, wherein the processor is configured to extract the second manual from the application when the application is downloaded by the display apparatus.

7. The display apparatus of claim 5, wherein the processor is configured to delete data corresponding to the second manual from the third manual when the application is uninstalled on the operating system.

8. A method of controlling a display apparatus, the method comprising:
receiving at least one second manual by the display apparatus which stores a first manual comprising data structure in at least one category; and
generating a third manual by integrating data of the first manual and data of the second manual based on the at least one category; and
storing the generated third manual.

9. The control method of claim 8, further comprising: displaying the stored third manual upon request,
wherein the generating the third manual comprises:
selecting data from the data of the second manual, wherein the selected data is selected based on at least one of status information about a structure and a function of the display apparatus and information about a usage pattern of a user; and
adding the selected data to the first manual.

10. The control method of claim 8, wherein the category comprises a category name, and the generating the third manual comprises integrating data of the respective categories of the first manual and the second manual which have the same category name into the same category of the third manual.

11. The control method of claim 8, wherein each of the manuals conforms to a Standard Generalized Markup Language (SGML) standard, and the generating the third manual comprises displaying an image of the third manual according to the SGML standard.

12. The control method of claim 8, wherein the first manual comprises information about an operating system for operation of the display apparatus, and the second manual comprises information about an application installed on the operating system.

13. The control method of claim 12, wherein the generating the third manual comprises extracting the second manual from the application when the application is downloaded.

14. The control method of claim 12, wherein the generating the third manual comprises deleting data corresponding to the second manual from the third manual when the application is uninstalled on the operating system.

15. The control method of claim 14, wherein in the generating the third manual the data corresponding to the second manual is deleted referring to history information which stores changes to contents of the first manual from the integration.
